# EUROPÄISCHE PATENTSCHRIFT

(11) **EP 0 297 492 B1**
(45) Veröffentlichungstag und Bekanntmachung des Hinweises auf die Patenterteilung: **16.02.1994**
(21) Anmeldenummer: 88110250.3
(22) Anmeldetag: 28.06.1988
(51) Int. Cl.: H04L 12/26

(54) **Verfahren zur Prüfung eines Netzwerkaufbaus**
Method of testing a network structure
Méthode de test de l'organisation d'un réseau

(30) Priorität: 01.07.1987 DE 3721719
(43) Veröffentlichungstag der Anmeldung: 04.01.1989
(73) Patentinhaber: Lawrenz, Wolfhard, Prof. Dr.-Ing., D-38302 Wolfenbüttel (DE)
(72) Erfinder: Lawrenz, Wolfhard, Prof. Dr.-Ing., D-38302 Wolfenbüttel (DE)
(74) Vertreter: Lins, Edgar, Dipl.-Phys. Dr.jur.

(56) Entgegenhaltungen:
- US-A- 4 551 833
- PROCEEDINGS OF THE 11TH CONFERENCE ON LOCAL COMPUTER NETWORKS, Minneapolis, Minnesota, 6.-8. Oktober 1986, Seiten 142-146; D.C. FELDMEIER: "Statistical monitors for local area networks"
- HEWLETT-PACKARD JOURNAL, Band 37, Nr. 7, Juli 1986, Seiten 42-48, Amstelveen, NL; G.A. Jensen et al.: "A protocol analyzer for local area networks"
- E.D.N. ELECTRICAL DESIGN NEWS, Band 31, Nr. 3, Februar 1986, Seiten 61-72,Boston, US; C.H. SMALL: "Logic analyzers evolve in response to high-level languages"
- ELEKTRONIK, Band 36, Nr. 18, 4. September 1987, Seiten 136-140, München, DE; W.LAWRENZ: "Entwicklungswerkzeuge für Controller-Netzwerke"

## Beschreibung

Die Erfindung betrifft ein Verfahren zur Prüfung eines Netzwerkaufbaus mit einer Mehrzahl von Datengeneratoren, deren Daten über einen Datenweg untereinander gesendet und empfangen werden sowie auf Steuereinheiten gelangen sollen, wobei für die konkurrierende Übertragung der Daten auf dem Datenweg Vorrangkriterien festgelegt sind.

Derartige Netzwerke dienen dazu, die Datenkommunikation unter einer Vielzahl von Rechnern, insbesondere Controllern bzw. Mikroprozessoren zu ermöglichen. Prinzipiell kann dabei jeder Rechner die Daten der anderen Rechner empfangen und auswerten und daraufhin ggf. selbst neue Daten generieren. Aufgrund der über den Datenbus erfolgten Vernetzung der Rechner kommt es selbstverständlich zu konkurrierenden Daten-Sendebereitschaften, für deren Abarbeitung Vorrangkriterien in einem Protokoll festgelegt sind. Muß ein Rechner in Sendebereitschaft gegenüber einem vorrangigen Sendewunsch zurückstehen, so muß er seinen Sendewunsch dem jeweiligen Protokoll entsprechend zurückstellen; bei manchen Protokollen ist es erforderlich, daß er sofort auf "Empfangen" umschaltet, um die Datensendung mit höherer Priorität aufnehmen und ggf. auswerten zu können, falls die Datensendung für ihn bestimmt ist.

Für die Auslegung eines derartigen Netzes ist die Bandbreite des Datenweges, beispielsweise eines Datenbus, und damit die auf dem Datenweg erreichbare Übertragungsgeschwindigkeit ein wesentliches Auslegungskriterium. Aus Aufwandsgründen sollte die Bandbreite so niedrig wie möglich gehalten werden, wohingegen eine schnelle Datenübertragung eine große Bandbreite erfordert.

Dem Designer derartiger Netzwerke stehen bisher keine Hilfsmittel zur Verfügung, ein derartiges Netz zu entwerfen. Er ist daher auf Erfahrungswerte angewiesen. Da die vorliegenden Erfahrungen bisher noch relativ klein und die Parameter eines Netzes vielfältig und - per definitionem - komplex und nicht analytisch eindeutig beschreibbar miteinander verwoben sind, wird das Netzwerk aufgebaut werden müssen, bis festgestellt werden kann, ob es in der gewünschten Weise arbeitet oder nicht. Diese Feststellung kann allerdings bisher nur am makroskopischen Ergebnis erfolgen, also beispielsweise bei einem in einem Automobil eingesetzten Netzwerk an der Funktion des Automobils, das durch das Netzwerk gesteuert wird. Es läßt sich dabei messen, ob die Koordination beispielsweise eines Bremsvorganges mit anderen Funktionen der Netzwerksteuerung, beispielsweise der Einspritzung, zufriedenstellend funktioniert. Stellen sich dabei erhebliche Reaktionsverzögerungen heraus, die auf eine permanente oder situationsbedingte Überlastung des Datenweges zurückzuführen ist, muß das gesamte Netzwerk neu geplant und aufgebaut werden. Die Erstellung eines brauchbar funktionierenden Netzwerkes ist daher teuer und zeitaufwendig.

Für die Analyse eines vollständig aufgebauten Netzwerkes kann ggf. auf Logic Analyzer zurückgegriffen werden, die den Signalpegelverlauf, beispielsweise an einer Schnittstelle, abspeichern und auf einem Bildschirm sichtbar machen können. Bei einer komplexeren Datenübertragung stehen dabei eine Vielzahl von fotografisch festgehaltenen Signalverläufen zur Verfügung, deren überprüfung zeitaufwendig und umständlich ist und eine hohe Konzentration der prüfenden Person über einen langen Zeitraum erfordert. Derartige Geräte sind unter Umständen auch in der Lage, über eine Schnittstelle o. ä. bestimmte Testsignale zu senden, um eine einwandfreie Übertragung zu verifizieren oder Fehler festzustellen. Geeignete Hilfsmittel für eine Netzwerkplanung sind diese bekannten Geräte jedoch nicht.

Der Erfindung liegt die Aufgabe zugrunde, ein Verfahren zur Prüfung eines derartigen Netzwerkaufbaus anzugeben, mit dem die Funktion des Netzwerkes detaillierter prüfbar ist, so daß optimierte Netzwerkaufbauten weniger aufwendig und preiswerter realisierbar sind.

Diese Aufgabe wird erfindungsgemäß dadurch gelöst, daß in realistischer Häufigkeit Datensignale der Datengeneratoren erzeugt und den Vorrangkriterien unterworfen werden, daß die Datensignale durch Zeitmarken ergänzt werden und daß anhand der Zeitmarken ermittelt wird, mit welcher Verzögerung Daten bestimmter Vorrangstufen über den Datenweg übertragbar sind.

Das erfindungsgemäße Verfahren ermöglicht erstmalig eine Prüfung der Datenübertragungsvorgänge in einem Netzwerk der oben erwähnten Art. Dadurch ist es möglich, die sich aus der Aufgabenstellung für das bestimmte Netzwerk ergebenden Parameter im Hinblick auf ihre Verträglichkeit mit den gewünschten Designstrukturen, beispielsweise mit der gewünschten Datenbus-Bandbreite, zu testen. Durch eine Überwachung der Datenflüsse in dem Datenweg läßt sich einerseits der Fluß der Daten über den Datenweg tabellarisch ermitteln, andererseits wird festgestellt, welche Daten zu einem bestimmten Zeitpunkt übermittelt werden sollten, aufgrund der bestehenden Vorrangkriterien aber zurückgestellt werden mußten und möglicherweise wegen einer Überlastung des Datenweges gar nicht übermittelt werden konnten.

Eine sehr aussagekräftige Auswertung besteht darin, für die Daten einer bestimmten Vorrangstufe statistisch zu ermitteln, wieviel Prozent dieser Daten nach einer gewissen Zeit erfolgreich übermittelt, und damit von den anderen Datengeneratoren als Rezeptoren verarbeitet worden sind.

Das erfindungsgemäße Verfahren läßt sich sehr zweckmäßig in mehreren Entwicklungsabschnitten eines Netzwerkes anwenden.

Die erste Anwendung ist bereits möglich, wenn das Netzwerk hardwaremäßig überhaupt noch nicht aufgebaut ist. In diesem Fall werden erfindungsgemäß die Datensignale simuliert erzeugt und den im Netzwerk herrschenden Vorrangkriterien unterworfen. Auf diese Weise lassen sich die oben erwähnten Auswertungen bereits einigermaßen realistisch vornehmen, so daß bereits in dieser Phase ermittelt werden kann, ob das vorgesehene Designkonzept für das Netzwerk voraussichtlich funktionsfähig ist oder nicht. Dabei kann ermittelt werden, ob von einigen Datengeneratoren (Meßstellen) in einer vorgesehenen Häufigkeit erzeugte Datensignale in der gewünschten Reaktionszeit in die anderen Datengeneratoren bzw. -rezeptoren gelangen, so daß sie dort verarbeitet werden können und das System auf die neuen Daten reagieren kann. Bei dieser Auswertung läßt sich daher nicht nur ermitteln, ob die vorgesehene Datenweg-Bandbreite ausreichend oder eventuell überdimensioniert ist, sondern es läßt sich auch ermitteln, ob die für die vorgesehene Steuerung erforderlichen Daten in der erforderlichen Häufigkeit erzeugt und mit den passenden Vorrangparametern übermittelt werden. Bei dieser vollständigen Simulation ist es zweckmäßig, Störeinflüsse, die im realen System wirksam werden, nachzubilden. Dies kann beispielsweise dadurch geschehen, daß Störungen als Signale mit höchster Priorität verarbeitet werden. Dabei wird vorzugsweise eine stochastische Erzeugung der Signale vorgesehen werden, deren Häufigkeit pro Zeiteinheit etwa der Häufigkeit des Auftretens von Störungen im realen Fall entsprechen sollte. Da beim Auftreten von Störsignalen die fehlerfreie Übertragung von Datensignalen nicht möglich ist, haben die Störsignale einen unmittelbaren Einfluß auf die erfindungsgemäße Auswertung der Vorgänge auf dem Datenweg.

Die vollständige Simulation der von den Datengeneratoren erzeugten Daten sowie der Entscheidungs- und Übertragungsvorgänge in dem vorgesehenen Netz ermöglicht bereits eine recht gute Annäherung des Netzdesigns an den optimalen Zustand.

Eine weitere Überprüfung mit dem erfindungsgemäßen Verfahren läßt sich in vorteilhafter Weise durchführen, wenn das Übertragungsnetz mit dem Datenweg und den Interfaces für die Datengeneratoren und -rezeptoren aufgebaut ist und die Arbeit der Rechner, d. h. Erzeugung der Datensignale und Ablauf der Entscheidungsvorgänge, simuliert wird. Ein derartiges System läßt bereits die Überprüfung mit real erzeugten Störungen zu. In Verbindung damit ist auch die physikalisch beste Art des Übertragungsweges sowie dessen Ankopplung und technische Ansteuerung in gestörter Umgebung testbar und optimierbar. Die auf dem Datenbus übertragenen Daten müssen dabei aufbereitet werden, um die gewünschte statistische Auswertung zu ermöglichen.

Die Datenübertragung im realen Netz findet üblicherweise mit einer so hohen Übertragungsgeschwindigkeit statt, daß eine Auswertung im Echtzeitverfahren nicht oder nur mit großem Aufwand möglich ist. Um den Auswertungsaufwand gering zu halten, wird die Auswertung mit einer geringeren Geschwindigkeit vorgenommen. Bei der oben erwähnten vollständigen Simulation ist dies nicht problematisch, da die Übertragungsvorgänge in einem anderen Zeitmaßstab, quasi in Zeitlupe, simuliert werden können. Für die Auswertung bei einem hardwaremäßig aufgebauten Übertragungsteil des Netzes ist es zweckmäßig, am Übergang zur Auswertungseinheit Speicher einzusetzen, durch die die Auswertung der Datensignale mit einer gegenüber der Echtzeit wesentlich langsameren Geschwindigkeit erfolgt. Hieraus resultiert, daß nach Abschluß der Übertragungsvorgänge eine gewisse Zeit verstreicht, bis die Auswertung erfolgt ist. Als Speicher eignen sich übliche first-in-first-out-Speicher.

Zur Synchronisierung der voneinander unabhängig arbeitenden Sender und Empfänger eines Netzwerks, muß aus den abgenommenen Datensignalen ein synchronisierter Zeittakt abgeleitet werden. Hierzu sind die Daten vorzugsweise mit einem Zusatzbit versehen, der als Zeittakt fungiert (bit stuffing). Dabei kann jedes n-te Bit einen Flankenwechsel aufweisen, der als Zeittaktsignal benutzt wird. Allerdings sind auch andere Taktwiedergewinnungsverfahren anwendbar.

Die Überprüfung mit dem nur im Übertragungsteil aufgebauten Netz erlaubt die Verifizierung der Erkenntnisse, die bei der vollständigen Simulation erhalten worden sind. Gegebenenfalls führt die erfindungsgemäße Überprüfung mit dem teilweise aufgebauten Netz zu Modifikationen, die aufgrund des Teilaufbaus noch relativ einfach möglich sind. Diese Modifikationen können sich beispielsweise durch einen anders vorhergesehenen Einfluß der real auf den Übertragungsteil einwirkenden Störungen erforderlich werden.

Das erfindungsgemäße Verfahren eignet sich auch zur Überprüfung des komplett aufgebauten Netzwerkes, wobei dann die Vorgänge in dem Netzwerk zeitlich analysiert und statistisch ausgewertet werden. Dadurch läßt sich im Anwendungsfall in realer Umgebung ermitteln, ob das Netzwerkdesign den gestellten Anforderungen unter realen Bedingungen gerecht wird. Darüber hinaus können dabei Fehler des Netzwerks entdeckt und lokalisiert werden, so daß auch die Durchführung von Diagnose und Wartung von Netzwerken möglich ist. Auch in diesem Fall müssen die auf den Datenweg übertragenen Datensignale aufgearbeitet werden. Da im analysierenden Fall die Datensignale beispielsweise von Controllern oder Mikroprozessoren erzeugt werden, kann bei einer Überwachung der Datenübertragung auf dem Datenweg nicht ohne weiteres festgestellt werden, zu welchem Zeitpunkt per Sendewunsch für das entsprechende Datensignal entstanden ist. Die Auswertung setzt jedoch voraus, daß der Zeitpunkt des Sendewunsches ermittelt wird, da sich hieraus unter Berücksichtigung der zeitlichen Länge des Datensignals und des Abschlusses der Übertragung die entstandene Verzögerung ermitteln läßt. Beim vollständig aufgebauten Netzwerk wird daher der Zeitpunkt des Sendewunsches unter Berücksichtigung der in unmittelbarer zeitlichen Umgebung übermittelten Datensignale und - falls bekannt - deren Priorität ermittelt, ob eine Verzögerung überhaupt aufgetreten sein kann. Dann läßt sich ermitteln, wie groß die Verzögerung im schlimmsten Fall gewesen sein kann. Für die Auswertung wird sicherheitshalber vorzugsweise auf den ungünstigsten Fall (worst case) zurückgegriffen, es ist jedoch auch denkbar, jeweils eine mittlere Verzögerung zugrundezulegen, die sich aus einem Mittelwert zwischen der Verzögerung im günstigsten und im ungünstigsten Fall ergibt. Vorzugsweise wird auch hierbei die Auswertung über Speicher mit einer gegenüber der Echtzeit wesentlich verringerten Geschwindigkeit vorgenommen, um den Auswertungsaufwand gering zu halten.

Die Erfindung soll im folgenden anhand von in der Zeichnung dargestellten Schemata näher erläutert werden. Es zeigen:
- Figur 1 -: eine schematische Darstellung eines Netzwerks, dessen Funktionen zur Überprüfung des Netzwerkentwurfes simuliert werden
- Figur 2 -: eine Darstellung gemäß Figur 1 für ein Netzwerk, das mit seinem Datenbus und den Interfaces aufgebaut ist und dessen übrige Funktionen in einer Emulatoranordnung simuliert werden
- Figur 3 -: eine Anordnung zur Analyse eines komplett aufgebauten Netzwerks
- Figur 4 -: eine schematische Darstellung der Signal-Aufbereitung für eine statistische Auswertung
- Figur 5 -: vier Schemata für den Aufbau von Datensignalen, die in den Anordnung gemäß Figuren 1 bis 3 verwendbar sind
- Figur 6 -: eine statistische Verteilungsauswertung für die Botschaftsübertragungsverzögerungen
- Figur 7 -: eine Tabelle für Übertragungsvorgänge auf einem Datenbus.

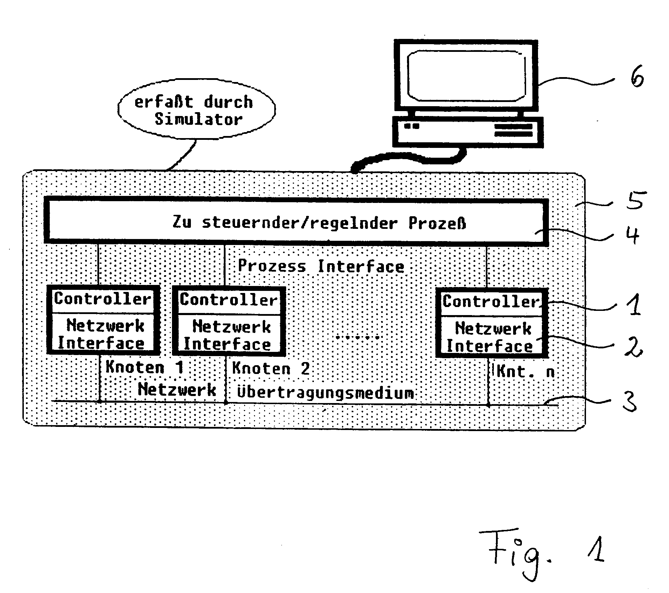

Ein Netzwerk, das mit dem erfindungsgemäßen Verfahren geprüft werden soll, ist in den Figuren 1 bis 3 schematisch dargestellt. Es besteht aus einer Anzahl von n Controllern 1 als Rechner, die jeweils über ein Interface 2 mit einem Datenbus 3 als Datenweg verbunden sind. Controller 1 und Interface 2 bilden einen sogenannten Knoten des Netzwerks. Die Controller 1 sind im allgemeinen Fall in der Lage, sowohl Datensignal auszusenden als auch Datensignale zu empfangen und zu verarbeiten. Die Controller 1 wirken gemeinsam auf eine Steuerung 4 ein, mit der ein System, beispielsweise die Steuerungs- und Regelvorgänge in einem Kraftfahrzeug, gesteuert wird.

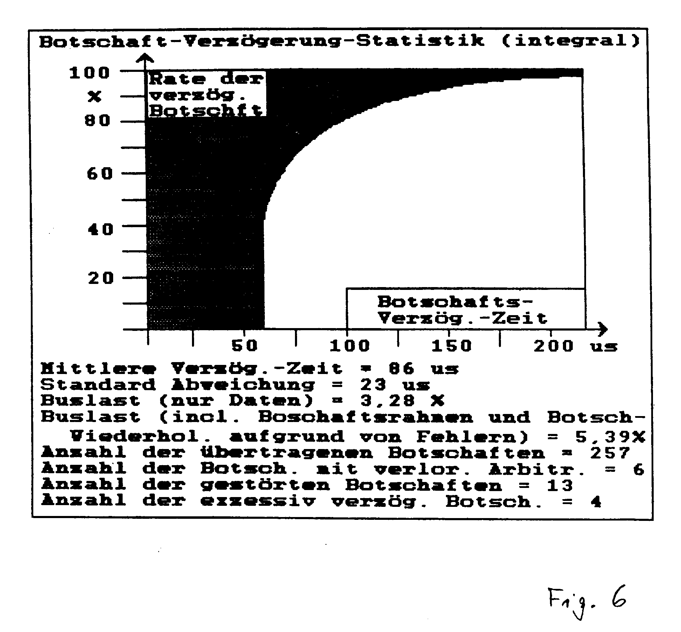

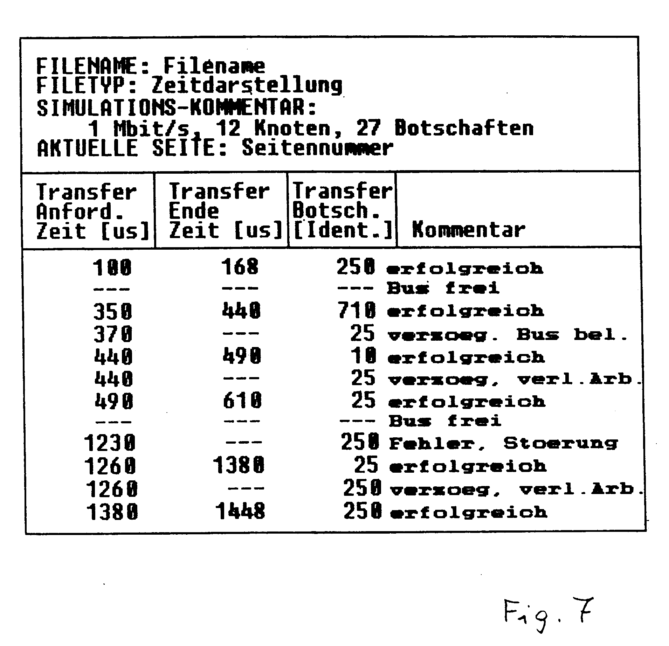

Die gepunktet unterlegte Fläche 5, die in Figur 1 das gesamte Netzwerk umfaßt, verdeutlicht, daß in dem in Figur 1 dargestellten Ausführungsbeispiel eine vollständige Simulation des gesamten Netzwerks vorgenommen wird, d. h. daß die Datensignale simuliert erzeugt, den Vorrangkriterien unterworfen und von der Steuerung 4 empfangen werden. Eine Auswertungsanordnung 6 wertet in der oben beschriebenen Weise die Übertragungsvorgänge auf dem Datenbus 3 in Abhängigkeit von den erzeugten und zur Übertragung bereitgestellten Datensignalen aus. Beispiele für Auswertungen sind in den Figuren 6 und 7 dargestellt, die unten näher erläutert werden.

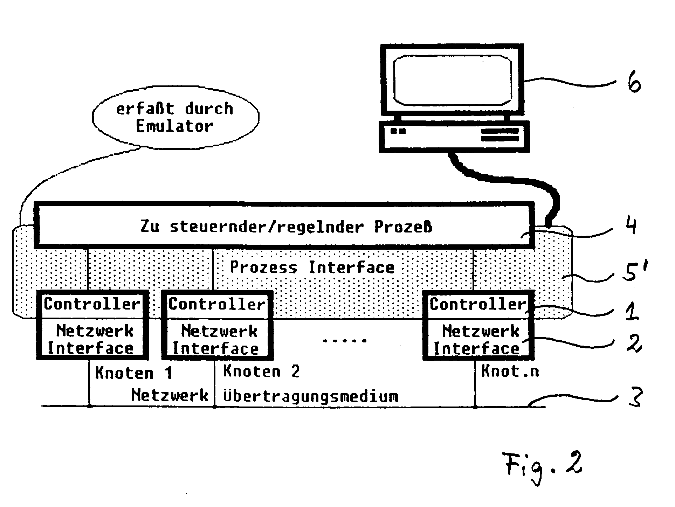

Figur 2 verdeutlicht eine sogenannte Emulation, bei der der Datenbus 3 und die Interfaces 2 bereits hardwaremäßig aufgebaut sind, die Controller 1 und die Übertragung zu der Steuerung 4 jedoch noch simuliert werden, wie die punktiert unterlegte Fläche 5′ verdeutlicht.

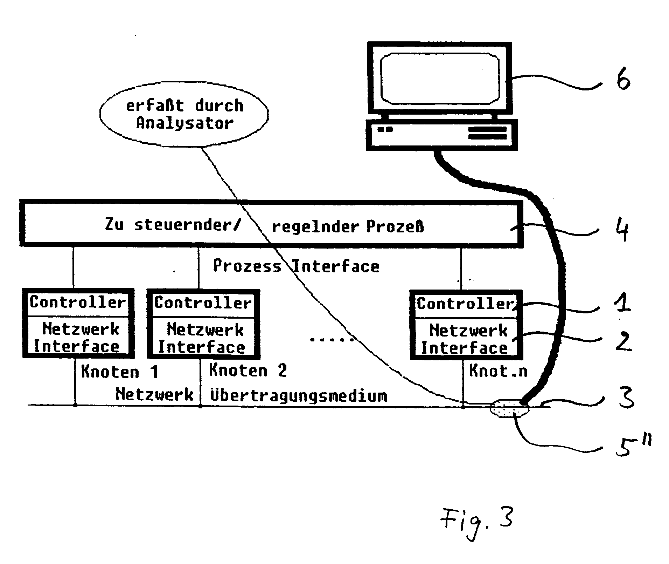

Figur 3 zeigt ein Ausführungsbeispiel für die Analyse eines vollständig aufgebauten Netzwerks aus Controllern 1, Interfaces 2, Datenbus 3 und Steuerung 4. Die Schnittstelle zu der Auswertungseinrichtung 6 erfolgt durch Abnahme der Daten vom Datenbus 3, wie dies durch die kleine punktiert unterlegte Fläche 5'' symbolisch angedeutet ist.

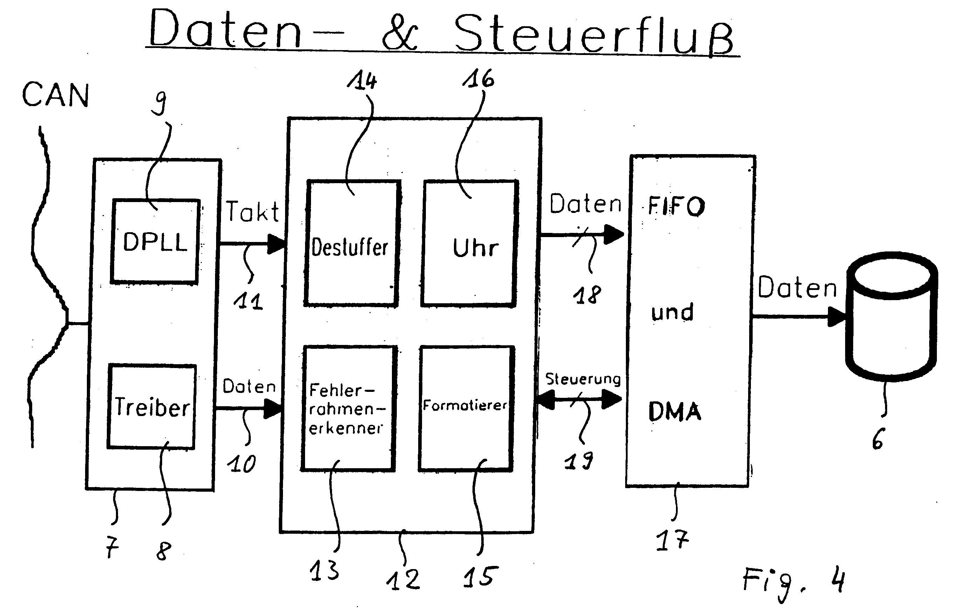

Figur 4 zeigt schematisch die Datenaufbereitung für den Datenfluß auf einem Datenbus 3 eines CAN-Netzwerkes.

Das abgenommene Signal wird in einer Signalaufbereitungsstufe 7 aufbereitet, die einen Treiber zur Signalformung und -verstärkung und einen digital phase locked loop DPLL 9 zur Synchronisierung aufweist. Am Ausgang der Signalaufbereitungsstufe 7 steht ein Datensignal 10 und ein Taktsignal 11 an. Die Signale 10, 11 gelangen auf eine Datenaufbereitungsstufe 12, in der die Daten zunächst in einem Fehlerdetektor 13 auf Fehler untersucht werden, in einer Destuffer-Stufe 14 von den zur Synchronisation zusätzlich eingefügten Bits befreit werden und in einer Formatierstufe 15 in ein vorbestimmtes Datenformat gebracht werden. Ferner enthält die Datenaufbereitungsstufe 12 eine Uhr 16, die die Echtzeit der übertragenen Signale kennzeichnet. An die Datenaufbereitungsstufe 12 schließt sich eine Speicherstufe 17 an, auf die ein Datenausgang 18 une eine Steuerleitung 19 der Datenaufbereitungsstufe 12 gelangt. Über die Steuerleitung 19 werden zwischen Datenaufbereitungsstufe 12 und Speicherstufe 17 Steuersignale ausgetauscht.

Die Speicherstufe 17 enthält einen first-in-first-out-Speicher, über den die Daten mit Zeitmarken versehen nach und nach auf die Auswertungseinheit 6 gelangen.

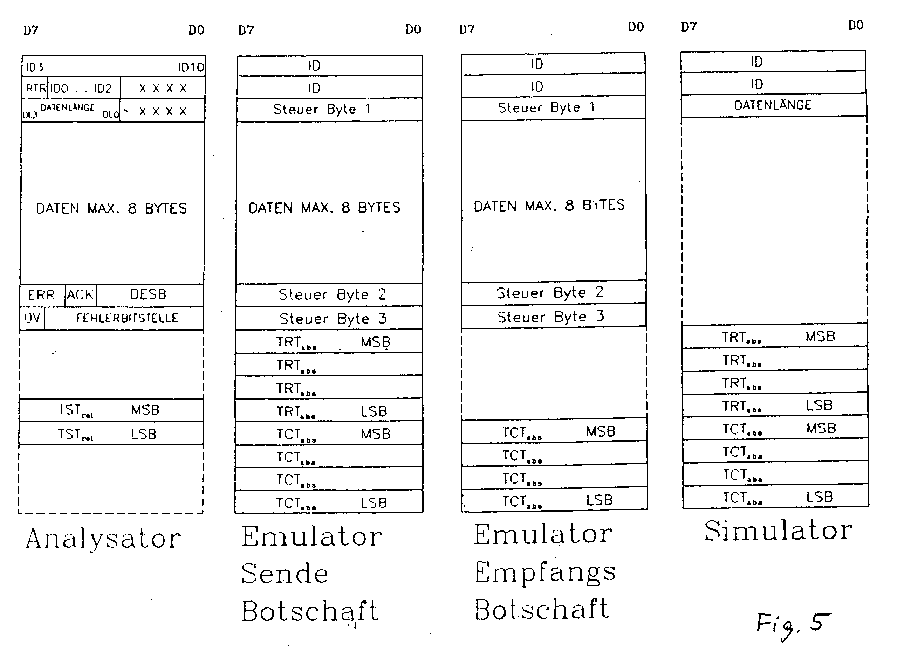

Figur 5 verdeutlicht, daß für den Analysatorbetrieb (Figur 3), den Emulatorbetrieb (Figur 2) und den Simulatorbetrieb (Figur 1) im wesentlichen gleiche Datenformate benutzt werden. Die im Netzwerk real übertragenen Datensignale sind formatiert, wie sie in Figur 5 für den Analysatorbetrieb dargestellt sind. Die enthalten einige Identifikationszeichen, die eigentlichen Daten, im vorliegenden Fall in maximal acht Bytes sowie eine Vielzahl von Kontrolldaten.

Für den Emulatorbetrieb werden Controlbytes verwendet, die eine ähnliche Bedeutung zur Steuerung der Nachbearbeitung und Auswertung haben sie die entsprechend definierten Kontrolldatenteile im Analysatorbetrieb. Für die ausgesandten Daten werden Zeitstempel TRT und TCT für den Sendewunsch- und für den Empfangszeitpunkt verteilt. Die Zeitstempel TRT bzw. TCT für den Zeitpunkt des Sendewunsches bzw. des Empfangs erstrecken sich über vier Bytes von MSB (most significant byte) nach LSB (lowest significant byte). Für die ein Datensignal nur empfangenden Controller entfallen die Zeitstempel für den Sendezeitpunkt.

Im Analysatorbetrieb kann das Datensignal lediglich mit dem Zeitstempel TST ersetzt werden, der im dargestellten Ausführungsbespiel nur aus zwei Bytes besteht, weil er nur eine relative Zeit beinhaltet. Gemessen wird jeweils der Zeitpunkt, an dem der Anfang eines Datensignals erkannt wird, wodurch das Ende der Übermittlung unter Berücksichtung der Länge des Datensignals ermittelbar ist. Es wäre auch denkbar, das Ende des Datensignals zu messen. Der zur Auswertung erforderliche Zeitpunkt des Sendewunsches muß indirekt festgelegt werden. Hierfür können aufgrund des analysierten Datenflusses auf dem Datenbus 3 günstigste und ungünstigste Annahmen gemacht werden und die entsprechenden Zeitpunkte ermittelt werden. Vorzugsweise wird der Auswertung der ungünstigste Zeitpunkt zugrundegelegt und hieraus die Zeitmarke TRT bzw. die für die Auswertung zugrundegelegte Verzögerung ermittelt. Je nach Anwendungsfall können sich auch andere Kriterien für realistische Annahmen zur Ermittlung der wahrscheinlichen Verzögerung ergeben.

Figuren 6 und 7 zeigen Ausführungsbeispiele für vorgegebene Netzparameter, nämlich 12 Knoten bei einem Datenbus mit einer Bandbreite von 1 Mbit/s. Zu übertragen waren 27 Botschaften, die mit bestimmten Wiederholraten zu senden waren.

Figur 6 zeigt eine Kurve, auf der angegeben ist, welcher Prozentsatz der Botschaften mit welcher Verzögerungszeit übertragbar ist. In der dargestellten Kurve sind knapp 50 % der Botschaften unverzögert, d. h. in der durch die Länge des Datensignals vorgegebenen Zeit von 52 µs übertragen worden. Die maximale Übertragungszeit übertrug etwas über 200 µs. Die statistische Auswertung ergibt eine durchschnittliche Verzögerungszeit von 86 µs und eine Busbelegung für eine einzelne Botschaft von 5,38 %. Übertragen wurden 275 Datensignale, wobei nur sechs Kollisionsfälle auftraten, bei denen aufgrund der Vorrangkriterien die Absendung zurückgestellt werden mußte. 13 Datensignale sind durch Rauschen zerstört worden, so daß die Aussendung wiederholt werden mußte. Vier Datensignale sind unerlaubt lange verzögert worden.

Die Busbelegung für 5,38 % für eine individuelle Botschaft gibt den Anteil dieser Botschaft an der Gesamtbelastung des Datenbus an. Dieser Wert ist ein Hinweis für den Netzwerkdesigner, inwieweit Änderungen der Priorität oder der Wiederholrate dieser Botschaft sich auf das Verhalten des Gesamtsystems auswirken.

Ein hier nicht dargestellter, jedoch zweckmäßigerweise ermittelter Wert für die gesamte Busbelegung gibt dem Netzwerkdesigner einen Hinweis darauf, ob die gewählte Busbandbreite richtig, zu großzügig oder zu knapp bemessen ist.

Figur 7 zeigt die Chronologie für die Übertragung der einzelnen Botschaften. In der ersten Spalte ist die Zeit angegeben, zu der die Übertragung stattfinden sollte, in der zweiten Spalte die Zeit, zu der die Übertragung beendet worden ist. Die dritte Spalte enthält die Identifikation ID, die im dargestellten Beispiel zugleich die Information über den relativen Vorrang enthält. Die Kommentare in der vierten Spalte erläutern die einzelnen Vorkommnisse.

Die Übertragung zum Zeitpunkt 100 ist konkurrenzlos und unproblemlatisch erfolgt. Die Übertragung zum Zeitpunkt 370 konnte nicht erfolgen, weil der Datenbus 3 durch die zum Zeitpunkt 350 begonnene Übertragung belegt war. Als die Übertragung von 350 zum Zeitpunkt 440 beendet war, konnte das zum Zeitpunkt 370 bereits anstehenden Signal mit ID 25 nicht übertragen werden, weil es dem Signal ID 10 den Vorrang einräumen mußte. Erst nach Übertragung des Signals ID 10 konnte die Übertragung des Signals ID 25 zum Zeitpunkt 610 abgeschlossen werden. Zum Zeitpunkt 1230 wurde das Signal ID 250 durch Rauschen zerstört, so daß eine Wiederholung zum Zeitpunkt 1260 erfolgten sollte. Zu diesem Zeitpunkt wurde jedoch das Signal ID 25 vorgezogen, weil es den Vorrang hatte. Daher konnte das Signal ID 250 erst zum Zeitpunkt 1380 ausgesandt werden und wurde zum Zeitpunkt 1448 von den Controllern 1 empfangen.

Die chronologische Auswertung gemäß Figur 7 erlaubt mikroskopisch genau die Beurteilung, ob die für die Steuerung 4 wesentlichen Vorgänge die richtige Vorrangstufe erhalten haben, so daß die Steuerung 4 in der gewünschten Reaktionszeit die nötigen Daten erhält.

Hiermit kann im einzelnen genau nachvollzogen werden, warum zu einem bestimmten Zeitpunkt eine bestimmte Botschaft wie stark verzögert wurde. Damit läßt sich ein individueller Fehlerfall analysieren und interpretieren, um dann ggf. entsprechende Änderungen des Netzwerk-Designs vorzunehmen.

Die statistische Auswertung gemäß Figur 6 spiegelt am besten das globale Verhalten des Netzwerks wieder. Mit Hilfe dieser Ergebnisse werden die wesentlichen Parameter des Netzwerks, dessen Übertragungsbandbreite und Vorrangreihenfolge der Botschaften, festgelegt.

## Patentansprüche

1. Verfahren zur Prüfung eines Netzwerkaufbaus mit einer Mehrzahl von Datengeneratoren (1), deren Daten über einen Datenweg (3) gesendet und ggf. empfangen werden sowie auf eine Steuerung (4) gelangen sollen, wobei für die konkurrierende Übertragung der Daten auf dem Datenweg (3) Vorrangkriterien festgelegt sind, dadurch gekennzeichnet, daß in realistischer Häufigkeit Datensignale der Datengeneratoren (1) erzeugt und den Vorrangkriterien unterworfen werden, daß die Datensignale durch Zeitmarken (TRT,TCT,TST) ergänzt werden und daß anhand der Zeitmarken ermittelt wird, mit welcher Verzögerung Daten bestimmter Vorrangstufen über den Datenweg (3) übertragbar sind.

2. Verfahren nach Anspruch 1, dadurch gekennzeichnet, daß die Datensignale zur Simulation von den Datengeneratoren (1) nach vorgegebenen Randbedingungen erzeugt und mit einer Zeitmarke (TRT) für den Zeitpunkt des Übertragungswunsches und mit einer Zeitmarke (TCT) für den Zeitpunkt der Beendigung der Übertragung versehen werden.

3. Verfahren nach Anspruch 1 oder 2, dadurch gekennzeichnet, daß Störungen als Signale mit höchster Priorität verarbeitet werden.

4. Verfahren nach einem der Ansprüche 1 bis 3, dadurch gekennnzeichnet, daß der Datenweg (3) mit seinen Interfaces (2) zu den Datengeneratoren (1) in der vorgesehenen Form aufgebaut wird und die generierten Datensignale über den Datenweg (3) übertragen werden.

5. Verfahren nach Anspruch 4, dadurch gekennzeichnet, daß die übertragenen Datensignale vom empfangenden Datengenerator (1) mit einer Zeitmarke (TCT) für den Zeitpunkt der Beendigung der Übertragung versehn werden.

6. Verfahren nach Anspruch 5, dadurch gekennzeichnet, daß ein ungleicher Lauf der verschiedenen Uhren der Datengeneratoren durch Vergleich der für das selbe Datensignal von dem sendenden und wenigstens einem empfangenden Datengenerator (1) ergebenen Zeitmarken (TCT) für den Zeitpunkt der Beendigung der Übertragung korrigiert wird.

7. Verfahren nach einem der Ansprüche 4 bis 6, dadurch gekennzeichnet, daß zur Auswertung Datenflüsse Speicher (17) am Übergang zur Auswertungseinheit (6) eingesetzt werden, durch die die Auswertung der Datensignale mit einer gegenüber der Echtzeit wesentlich langsameren Geschwindigkeit erfolgt.

8. Verfahren nach Anspruch 7, dadurch gekennzeichnet, daß als Speicher (17) first-in-first-out-Speicher verwendet werden.

9. Verfahren nach einem der Ansprüche 4 bis 8, dadurch gekennzeichnet, daß zur Abnahme der Datensignale die Daten aufbereitet und aus ihnen ein zum Sender synchroner Zeittakt abgeleitet wird.

10. Verfahren nach einem der Ansprüche 1 bis 9, dadurch gekennzeichnet, daß zur Synchronisation die Daten mit einem Zusatzbit versehen werden (bit stuffing).

11. Verfahren nach Anspruch 9 oder 10, dadurch gekennzeichnet, daß jedes n-te Bit einen Flankenwechsel aufweist.

12. Verfahren nach Anspruch 1, dadurch gekennzeichnet, daß
a) in einem ersten Schritt der Datenfluß vollständig simuliert wird und mit den Zeitmarken die Auswertung vorgenommen wird,
b) in einem zweiten Schritt der Datenweg (3) mit seinen Interfaces (2) für die Datengeneratoren (1) real aufgebaut und simuliert erzeugte Datensignale real übertragen werden und um die Zeitmarken ergänzt in einen Speicher (17) laufen, der zur Auswertung leergearbeitet wird und
c) in einem dritten Schritt das komplette Netzwerk aufgebaut wird und die im Netzwerk übertragenen Signale aufbereitet, mit Zeitmarken (TST) ergänzt und ausgewertet werden, wobei die Signale in einen Speicher (17) laufen, der zur Auswertung leergearbeitet wird.

13. Verfahren nach Anspruch 12, dadurch gekennzeichnet, daß in den drei Schritten analog aufgebaute Datensignale verwendet werden (Figur 5).

14. Verfahren nach einem der Ansprüche 4 bis 13, dadurch gekennzeichnet, daß die Datensignale um Zeitmarken (TST) ergänzt werden, die einem gemessenen Zeitpunkt der Übertragung entsprechen und daß die Auswertung mittels dieser Zeitmarke und dem Ablauf des Datenstromes auf dem Datenweg (3) derart vorgenommen wird, daß hieraus ein Zeitpunkt für den Sendewunsch angenommen wird.

15. Verfahren nach Anspruch 14, dadurch gekennzeichnet, daß die Auswertung mit einem angenommenen Zeitpunkt für den Sendewunsch unter ungünstigsten Bedingungen vorgenommen wird.

## Claims

1. A process for testing a network construction comprising a plurality of data generators (1), the data items of which, via a data path (3), are transmitted and possibly received and are to pass to a control unit (4), wherein priority criteria are defined for the concurrent transmission of the data items on the data path (3), characterised in that with realistic frequency data signals of the data generators (1) are generated and subjected to the priority criteria, that the data signals are supplemented by timing marks (TRT, TCT, TST) and that the delay with which data items of specified priority levels can be transmitted via the data path (3) is determined on the basis of the timing marks.

2. A process as claimed in Claim 1, characterised in that the data signals for simulation are generated by the data generators (1) in accordance with predetermined limiting conditions and are provided with a timing mark (TRT) for the time of the transmission request and with a timing mark (TCT) for the time of the end of the transmission.

3. A process as claimed in Claim 1 or 2, characterised in that disturbances are processed as signals of the highest priority.

4. A process as claimed in one of Claims 1 to 3, characterised in that the data path (3), with its interfaces (2) to the data generators (1), is constructed in the given form and the generated data signals are transmitted via the data path (3).

5. A process as claimed in Claim 4, characterised in that the transmitted data signals are provided by the receiving data generator (1) with a timing mark (TCT) for the time of the end of the transmission.

6. A process as claimed in Claim 5, characterised in that asynchronous operation of the various clocks of the data generators is corrected by comparing the timing marks (TCT) for the time of the end of the transmission, supplied for the same data signal by the transmitting data generator and at least one receiving data generator (1).

7. A process as claimed in one of Claims 4 to 6, characterised in that stores (17) at the junction to the analysis unit (6) are used for the analysis of data flows, by which stores (17) the data signals are analysed at a speed substantially slower than the real time.

8. A process as claimed in Claim 7, characterised in that first-in-first-out stores are used as stores (17).

9. A process as claimed in one of Claims 4 to 8, characterised in that for the acquisition of the data signals the data items are processed and a timing pulse synchronous with the transmitter is derived therefrom.

10. A process as claimed in one of Claims 1 to 9, characterised in that for the synchronisation the data times are provided with an additional bit (bit stuffing).

11. A process as claimed in Claim 9 or 10, characterised in that each n-th bit exhibits a flank change.

12. A process as claimed in Claim 1, characterised in that
a) in a first step the data flow is completely simulated and the analysis is carried out using the timing marks
b) in a second step the data path (3), with its interfaces (2) to the data generators (1), is constructed in real form and data signals generated in simulated form are transmitted in real form and, supplemented by the timing marks, pass into a store (17) which is operated at no-load for the analysis and
c) in a third step the complete network is constructed and the signals transmitted in the network are prepared, supplemented by timing marks (TST), and analysed, where the signals pass into a store (17) which is operated at no-load for the analysis.

13. A process as claimed in Claim 12, characterised in that data signals constructed in analogue form are used in the three steps (Figure 5).

14. A process as claimed in one of Claims 4 to 13, characterised in that the data signals are supplemented by timing marks (TST) which correspond to a measured time of transmission, and that the analysis is carried out by means of this timing mark and the sequence of the data flow on the data path (3) in such manner that a time for the transmission request is assumed therefrom.

15. A process as claimed in Claim 14, characterised in that the analysis is carried out with an assumed time for the transmission request under very unfavourable conditions.

## Revendications

1. Procédé pour tester l'organisation d'un réseau comportant plusieurs générateurs de données (1) dont les données sont émises et le cas échéant reçues par l'intermédiaire d'un circuit de données (3) et doivent parvenir à un pilotage (4), des critères de priorité étant fixés pour la transmission concourante des données sur le circuit de données (3), caractérisé en ce qu'en quantités réalistes on produit des signaux de données des générateurs de données (1) et on les assujettit aux critères de priorité, en ce qu'on complète les signaux de données avec des dateurs (TRT, TCT, TST) et en ce qu'à l'aide des dateurs on détermine avec quel retard des données ayant des rangs de priorité déterminés sont transmissibles sur le circuit de données (3).

2. Procédé selon la revendication 1, caractérisé en ce que les signaux de données pour la simulation sont produits par les générateurs de données (1) d'après des conditions de bord prédéterminées et sont munies d'un dateur (TRT) pour l'instant de l'intention d'émettre et d'un dateur (TCT) pour l'instant de la fin de la transmission.

3. Procédé selon la revendication 1 ou 2, caractérisé en ce qu'on traite des perturbations comme des signaux à priorité maximale.

4. Procédé selon l'une des revendications 1 à 3, caractérisé en ce qu'on réalise le circuit de données (3) avec ses interfaces (2) vers les générateurs de données (1) dans la forme prévue et en ce qu'on transmet les signaux de données générés sur le circuit de données (3).

5. Procédé selon la revendication 4, caractérisé en ce que les signaux de données transmis sont munis, par le générateur de données (1) récepteur, d'un dateur (TCT) pour l'instant de la fin de la transmission.

6. Procédé selon la revendication 5, caractérisé en ce qu'on corrige un fonctionnement irrégulier des différentes horloges des générateurs de données en comparant les dateurs (TCT) donnés pour le même signal de données par le générateur de données émetteur et au moins un générateur de données récepteur (1) pour l'instant de la fin de la transmission.

7. Procédé selon l'une des revendications 4 à 6, caractérisé en ce que pour l'évaluation des flux de données, on installe des mémoires (17) au passage à l'unité d'évaluation, par laquelle l'évaluation des signaux de données a lieu à une vitesse nettement ralentie par rapport au temps réel.

8. Procédé selon la revendication 7, caractérisé en ce qu'on utilise comme mémoires (17) des mémoires premier-entré-premier-sorti.

9. Procédé selon l'une des revendications 4 à 8, caractérisé en ce que pour prélever les signaux de données on remet en forme les données et on en tire une cadence d'horloge synchrone avec l'émetteur.

10. Procédé selon l'une des revendications 1 à 9, caractérisé en ce que pour la synchronisation les données sont munies d'un bit supplémentaire ("bit stuffing", ou garnissage de bit).

11. Procédé selon la revendication 9 ou 10, caractérisé en ce que chaque énième bit présente un changement de flanc.

12. Procédé selon la revendication 1, caractérisé en ce que :
a) à un premier stade, on simule complètement le flux de données et on procède à l'évaluation avec les dateurs ;
b) à un second stade on réalise réellement le circuit de données (3) avec ses interfaces (2) pour les générateurs de données (1) et des signaux de données produits par simulation sont transmis réellement et parviennent complétés de dateurs à une mémoire (17), que l'on vide pour procéder à l'évaluation ; et
c) à un troisième stade on réalise le réseau complet et on remet en forme les signaux transmis dans le réseau, on les complète avec des dateurs (TST) et on les évalue, les signaux passant dans une mémoire (17), que l'on vide pour procéder à l'évaluation.

13. Procédé selon la revendication 12, caractérisé en ce que l'on utilise aux trois stades des signaux de données constitués de manière analogue (figure 5).

14. Procédé selon l'une des revendications 4 à 13, caractérisé en ce qu'on complète les signaux de données avec des dateurs (TST) qui correspondent à un instant donné de la transmission et en ce qu'on procède à l'évaluation au moyen de ces dateurs et de l'écoulement du flux de données sur le trajet de données (3) de façon à en tirer une hypothèse sur l'instant de l'intention d'émettre.

15. Procédé selon la revendication 14, caractérisé en ce qu'on procède à l'évaluation en faisant sur l'instant de l'intention d'émettre une hypothèse correspondant aux conditions les plus défavorables.
